# EUROPEAN PATENT APPLICATION

(11) **EP 1 297 989 A2**
(43) Date of publication of application: **02.04.2003**
(21) Application number: 02021892.1
(22) Date of filing: 01.10.2002
(51) Int. Cl.: B60K 37/00

(54) **Method of setting the angle of a display in an instrument panel**

(30) Priority: 01.10.2001 JP 2001305499
(71) Applicant: Pioneer Corporation, Tokyo-to (JP); Pioneer Design Corporation, Meguro-ku, Tokyo (JP)
(72) Inventor: Nagai, Yoshiaki c/o Pioneer Corporation, Tokyo-to (JP); Harasawa, Naoki c/o Pioneer Design Corporation, Tokyo-to (JP); Kitamura, Meiji c/o Pioneer Design Corporation, Tokyo-to (JP)
(74) Representative: Skuhra, Udo, Dipl.-Ing.

(57) **Abstract**

A display (3,4,5,6) is set within a view angle of a driver who drives a vehicle, and a certain image is displayed on the display. The display (3, 4, 5, 6) is set so that the angle between the screen of the display and a line of driver's sight is larger than 90 degrees by a predetermined angle.

## Description

### BACKGROUND OF THE INVENTION

### Field of the Invention:

The present invention relates to a technical field relating to a method of setting a display in a vehicle instrument panel or the like.

### Description of the Related Art:

Conventionally, an instrument panel in which a speedometer, a tachometer, etc., are set is provided at a front of a driver's seat. Display systems using a liquid crystal display which is mounted on the instrument panel and on which the speedometer, the tachometer, and navigation information such as map information, road information, and route guide information are displayed have recently been put to use on a trial basis.

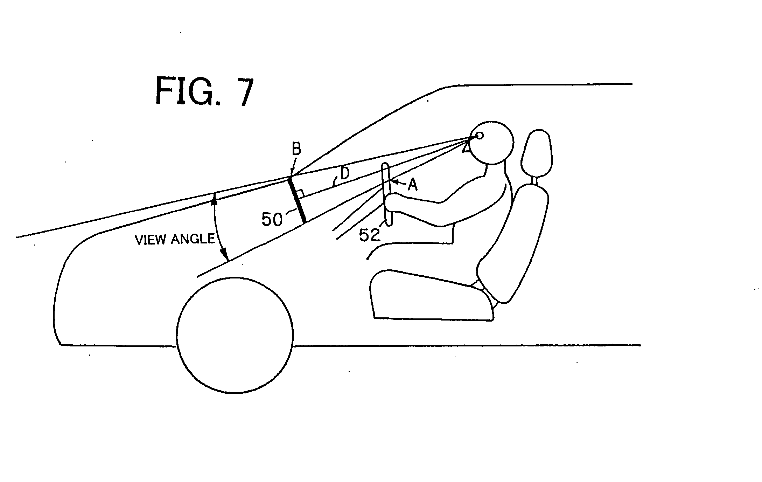

A vehicle driver has a view angle, as is well known, and there is a need to set the above-described liquid crystal display in such a position that the driver can view a screen of the display within the view angle. FIG. 7 is a diagram showing the view angle of a vehicle driver. Ordinarily, a driver's view angle refers to the angle between an upper end B of an instrument panel 50 and a lower end A of an opening formed through a steering wheel 52, as shown in FIG.7.

Also, it is a common practice to set the above-described liquid crystal display so that the angle between the screen of the display and a line of driver's sight D is substantially a right angle (90 degrees) while the screen is set in correspondence with the above-described view angle.

However, there has been a problem that in the case where the liquid crystal display is set so that the angle between the screen and the line of driver's sight D is substantially a right angle, the display area of the screen of the liquid crystal display is necessarily limited and the amount of information displayable on the screen is not sufficiently large.

On the liquid crystal display for displaying the above-mentioned navigation information, an arrow indicating a road on which the vehicle is running and the heading of the vehicle is ordinarily displayed. However, if the angle between the screen of the liquid crystal display and the line of driver's sight D is substantially a right angle, the arrow on the screen is in a vertically upward direction when the vehicle is running forward. That is, the upwardly directed arrow is only a virtual expression of the forward traveling direction of the vehicle, not an expression of the forward traveling direction with higher reality, and is unsatisfactory in terms of convenience.

### SUMMARY OF THE INVENTION

It is therefore an object of the present invention to provide a method of setting a display, the display, a method of setting an instrument panel, a setting structure of a display and a setting structure of an instrument panel which are devised so that the display screen of the display and the range of driver' s visual recognition can be increased to enable provision of a larger amount of information and to improve the display for driver's convenience.

The above object of the present invention can be achieved by a method of setting a display which is set within a view angle of a driver who drives a vehicle, and on which a certain image is displayed, wherein there is set the display so that the angle between the screen of the display and a line of driver's sight is larger than 90 degrees by a predetermined angle.

Herein, the angle larger than 90 degrees by a predetermined angle is an angle selected according to a technical concept that the display is inclined from the position at which the angle between the screen of the display and the line of driver's sight is approximately 90 degrees so that this angle is increased. If such an angle is selected, the display area of the display and the range of driver's visual recognition can be increased to enable provision of a larger amount of information and to improve the display for driver's convenience.

According to the present invention, the display is inclined from the position at which the angle between the screen of the display and the line of driver' s sight is approximately 90 degrees so that this angle is increased, thereby enabling the display area of the display and the range of driver's visual recognition to be increased to enable provision of a larger amount of information.

In one aspect of the method of setting a display of the present invention, the display is set so that the angle between the screen of the display and the line of driver's sight is equal to or larger than 130 degrees and equal to or smaller than the angle to a horizontal line parallel to the ground.

According this aspect, the display for driver's convenience can be improved all the more.

In another aspect of the method of setting a display of the present invention, the angle between the screen of the display and the line of driver's sight is adjustable.

According this aspect, each of different drivers can adjust the angle of the display, thus improving the convenience of the display.

In further aspect of the method of setting a display of the present invention, the display is an organic EL display.

Herein, it is known that displays have an angle dependence. For example, when the angle between the screen of a liquid crystal display and the line of driver' s sight is a right angle (90 degrees), the sharpness of the display is maximized. As the angle of the screen of the liquid crystal display from the line of driver's sight is increased, the sharpness becomes gradually lower.

According this aspect, because of specific characteristics of the organic EL element, i.e., extremely high luminance and low angle dependence, the driver can read information on the display sufficiently easily even if the angle between the display screen and the line of driver's sight is larger than 90 degrees by a certain angle.

The above object of the present invention can be achieved by a display which is set within a view angle of a driver who drives a vehicle, and on which a certain image is displayed, wherein the display is set so that an angle between a screen of the display and a line of driver's sight is larger than 90 degrees by a predetermined angle.

Moreover, the display may be set so that the angle between the screen of the display and the line of driver's sight is equal to or larger than 130 degrees and equal to or smaller than the angle to a horizontal line parallel to the ground.

Moreover, the display may be an organic EL display.

The above object of the present invention can be achieved by a method of setting an instrument panel at a front of a driver' s seat in a vehicle, wherein there is set the instrument panel so that the angle between the front surface of the instrument panel and a line of driver's sight is larger than 90 degrees by a predetermined angle.

According to the present invention, the instrument panel is inclined from the position at which the angle between the front surface of the instrument panel and the line of driver's sight is approximately 90 degrees so that this angle is increased, thereby enabling the display area of the display and the range of driver' s visual recognition to be increased to enable provision of a larger amount of information.

In one aspect of the method of setting an instrument panel of the present invention, the instrument panel is set so that the angle between the front surface of the instrument panel and the line of driver's sight is equal to or larger than 130 degrees and equal to or smaller than the angle to a horizontal line parallel to the ground.

According this aspect, the display for driver's convenience can be improved all the more.

In another aspect of the method of setting an instrument panel of the present invention, the angle between the front surface of the instrument panel and the line of driver's sight is adjustable.

According this aspect, each of different drivers can adjust the angle of the display, thus improving the convenience of the display.

In further aspect of the method of setting an instrument panel of the present invention, a display on which a certain image is displayed is mounted in the front surface of the instrument panel.

According this aspect, the area of the front surface of the instrument panel can be increased relative to that in the conventional arrangement. Correspondingly, the display area of the display mounted in the instrument panel can be increased and the range of driver's visual recognition can also be increased, thus enabling display of a larger amount of information.

In further aspect of the method of setting an instrument panel of the present invention, displays on which images of a left-rear view and a right-rear view from the vehicle are displayed are mounted in the front surface of the instrument panel.

According this aspect, the need for side mirrors such as those conventionally mounted on opposite side portions of a vehicle can be eliminated and the driver can check left-rear and right-rear views from the vehicle more easily when using the displays than when using the conventional side mirrors. Also, the display area of each of the displays can be increased as described above to ensure that the driver can check left-rear and right-rear views from the vehicle more easily when using the displays than when using the conventional side mirrors.

In further aspect of the method of setting an instrument panel of the present invention, a display on which an image of a road traveled by the vehicle and an arrow indicating the direction of traveling of the vehicle are displayed is mounted in the front surface of the instrument panel.

According this aspect, it is possible to express with higher reality the actual forward traveling direction of the vehicle to be recognized by the driver. The convenience of the display system can be thus improved.

In still further aspect of the method of setting an instrument panel of the present invention, each of the displays is an organic EL display.

The above object of the present invention can be achieved by a setting structure of a display which is set within a view angle of a driver who drives a vehicle, and on which a certain image is displayed, wherein the display is set so that the angle between the screen of the display and a line of driver's sight is larger than 90 degrees by a predetermined angle.

In one aspect of the setting structure of a display of the present invention, the display is set so that the angle between the screen of the display and the line of driver's sight is equal to or larger than 130 degrees and equal to or smaller than the angle to a horizontal line parallel to the ground.

The above object of the present invention can be achieved by a setting structure of an instrument panel which is set at a front of a driver's seat in a vehicle, wherein the instrument panel is set so that the angle between the front surface of the instrument panel and a line of driver's sight is larger than 90 degrees by a predetermined angle.

In one aspect of the setting structure of an instrument panel of the present invention, the instrument panel is set so that the angle between the front surface of the instrument panel and the line of driver's sight is equal to or larger than 130 degrees and equal to or smaller than the angle to a horizontal line parallel to the ground.

In another aspect of the setting structure of an instrument panel of the present invention, displays on which images of a left-rear view and a right-rear view from the vehicle are displayed are mounted in the front surface of the instrument panel.

In further aspect of the setting structure of an instrument panel of the present invention, a display on which an image of a road traveled by the vehicle and an arrow indicating the direction of traveling of the vehicle are displayed is mounted in the front surface of the instrument panel.

### BRIEF DESCRIPTION OF THE DRAWINGS

FIG. 1A is a schematic side view of instrument panel according to an embodiment of the present invention set at the front side of a driver's seat of a vehicle;
FIG. 1B is a schematic top view of steering wheel 2 shown in FIG. 1A;
FIG. 2 is a front view (top view) of the instrument panel 1;
FIG. 3 is a block diagram showing a configuration of essential components of vehicle-mounted image display system 100 according to the embodiment of the present invention for displaying predetermined images on organic EL displays 3 to 6;
FIG. 4 is a diagram showing a file configuration in each of memories 11a, 12a, 13a, and 14a;
FIG. 5 is a flowchart showing processing in a CPU 19a in a control unit 19;
FIG. 6 is a diagram showing an example of a case where six organic EL displays are mounted on an instrument panel; and
FIG. 7 is a diagram showing a view angle of a vehicle driver.

### DETAILED DESCRIPTION OF THE PREFERRED EMBODIMENTS

A preferred embodiment of the present invention will be described below with reference to the accompanying drawings.

### [1. Method and structure of Setting Instrument Panel and Display]

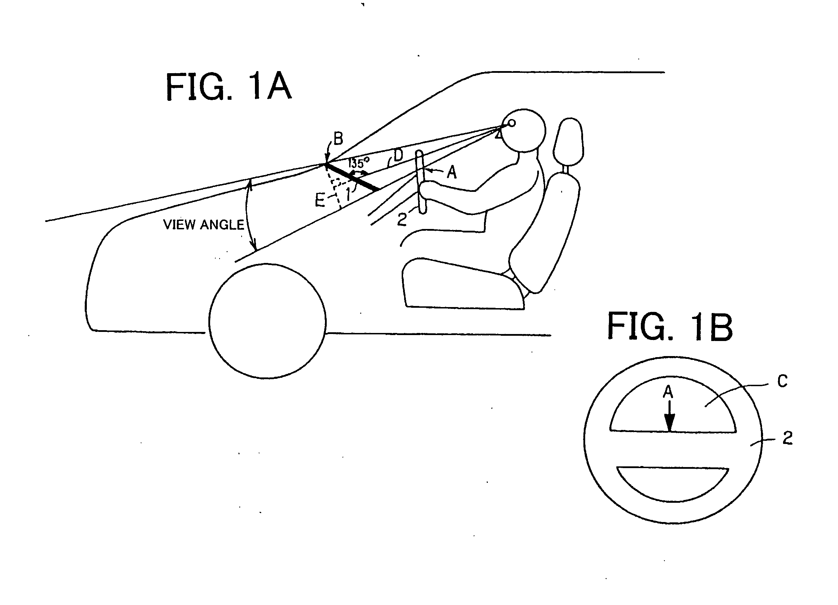

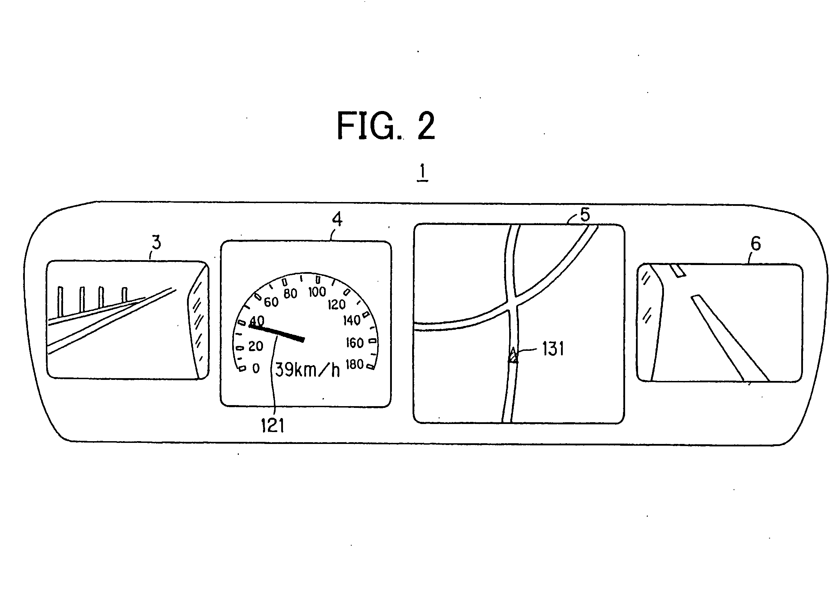

A method and structure of setting an instrument panel and a display in this embodiment will first be described with reference to FIGS. 1 and 2.

FIG. 1A is a schematic side view of an instrument panel 1 in accordance with the present invention set at a front of a driver's seat, and FIG. 1B is a schematic top view of a steering wheel 2 shown in FIG. 1A. As shown in FIG. 1A, the instrument panel 1 is set in a region within a view angle of a driver, i.e., an angle between an upper end B of the instrument panel 1 and a lower end A of an opening formed through the steering wheel 2. This instrument panel 1 is set so that an angle between the front surface of the instrument panel 1 and a line of driver's sight D is, for example, equal to or larger than 130 degrees and smaller than an angle to a horizontal line parallel to the ground (road). In FIG. 1A, an angle of about 135 degrees is shown by way of example as the angle between the front surface of instrument panel 1 and the line of driver's sight D. That is, the instrument panel 1 is inclined by about 40 degrees or more away from the driver from a position E of the conventional instrument panel (at which the angle between the front surface of the instrument panel and the line of driver's sight D is 90 degrees).

An operating switch is provided in the vicinity of the instrument panel 1. The driver can adjust the angle between the front surface of the instrument panel 2 and the line of driver's sight D so that this angle is equal to or larger than the above-mentioned angle at about 130 degrees and equal to or smaller than the angle to a horizontal line parallel to the ground surface. Different drivers can adjust the angle between the front surface of the instrument panel 2 and the line of driver's sight D according to their respective conditions. Thus, improved convenience of the instrument panel is ensured.

FIG. 2 is a front view (top view) of the instrument panel 1. As shown in FIG. 2, four displays for displaying predetermined images are set in a front surface of the instrument panel 1. In this embodiment, these displays are organic electroluminescent (EL) displays 3 to 6 each constituted by a plurality of organic EL elements arranged in matrix form and drive devices (e.g., thin film transistors (TFTs) or thyristors) for controlling currents flowing through the organic EL elements.

Each EL element is formed of multiple layers: a data electrode (transparent electrode), a light-emitting layer, and a scanning electrode (metallic electrode). The light-emitting layer is formed of organic EL materials, e.g., a combination of a layer of a hole transport material such as α-NPD or a triphenyl diamine derivative (TPD), a layer of an electron transport layer such as an aluminum-quinolyl complex (Alq3) which is a light-emitting material, and other various light-emitting materials or a mixture layer of such materials. When a potential difference is caused between the data electrode and the scanning electrode, an electric field is generated across the light-emitting layer. Electron-hole pairs are generated by electrons accelerated by this electric field, or electrons are excited at an emission center. Light is emitted when the electron-hole pairs disappear or at the time of return from the excited state to the steady state. By this emission of light, when the potential difference is about 10 V, an extremely high luminance of several hundred to several thousand candela/m² can be obtained.

The angle dependence in essential characteristics of the organic EL element is lower than that of liquid crystal cells. The angle dependence of the organic EL element can be further reduced (the reduction in luminance depending on the viewing angle is limited) by roughening the surface of the light-emitting layer adjacent to the scanning electrode or the surface of the scanning electrode adjacent to light-emitting layer. Varied optical path lengths from the emission center are thereby set to reduce the uniformity contributing to the interference effect.

The organic EL displays 3 to 6 are mounted in the front surface of the instrument panel 1 so that the display screen and the instrument panel surface are parallel to each other. Correspondingly, the organic EL displays 3 to 6 are also set so that the angle between the screen (front surface) of each EL display and the line of driver's sight D is equal to or larger than about 130 degrees and equal to or smaller the angle to a horizontal line parallel to the ground.

Even though each of the organic EL displays 3 to 6 is inclined by about 40 degrees or more away from the driver from the position E of the conventional instrument panel (at which the angle between the front surface of the instrument panel and the line of driver's sight D is 90 degrees), the driver can read information on the display sufficiently easily thanks to the extremely-high-luminance low-angle dependence characteristics of the organic EL elements. The readability for the driver is maximized when the angle between the front surface of the EL display and the line of driver's sight D is in the range from about 135 to 150 degrees.

It is possible to increase the display area of the display (e.g., 1.5 time or more larger than the display area in the conventional art) by inclining the display from the position E of the conventional instrument panel (at which the angle between the front surface of the panel and the line of driver's sight D is 90 degrees) so that the angle between the screen of the display and the line of driver's sight is increased by about 40 degrees or more from an angle of about 90 degrees. Also, the range of driver's visual recognition is increased, thus enabling provision of a larger amount of information.

### [2. Modes of Use of Display]

As described above, the display area of each of the organic EL displays 3 to 6 can be increased by inclining the instrument panel 1 through an angle of about 40 degrees or more from the position E of the conventional instrument panel (at which the angle between the front surface of the panel and the line of driver's sight D is 90 degrees) . Modes of effective use of the organic EL displays 3 to 6 set as described above will be described with reference to FIGS. 2 to 4.

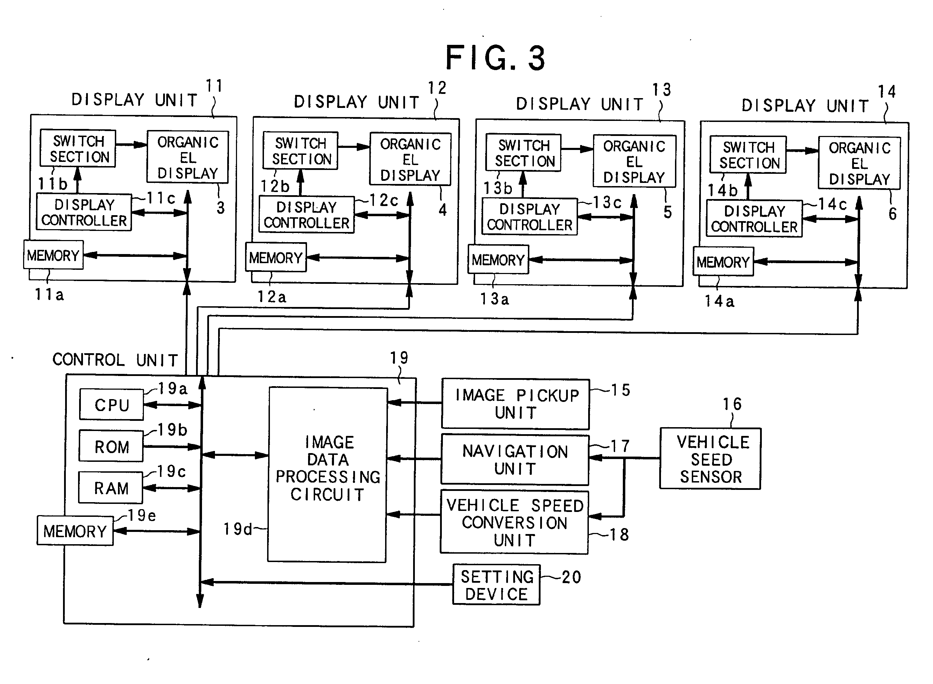

FIG.3 is a block diagram showing a configuration of essential components of a vehicle-mounted image display system 100 for displaying predetermined images on the organic EL displays 3 to 6 of this embodiment.

As shown in FIG. 3, the vehicle-mounted image display system 100 includes display units 11 to 14, an image pickup unit 15, a vehicle speed sensor 16, a navigation unit 17, a vehicle speed conversion unit 18, a control unit 19, and a setting device 20. The image pickup unit 15, the navigation unit 17, the vehicle speed conversion unit 18 and the setting device 20 are respectively connected by cables to the control unit 19. Each of the display units 11 to 14 is connected to the control unit 19 by an RS485 interface and a cable, for example.

Each of the display units 11 to 14 is an independent unit constituted by the above-described organic EL display, a memory, a switch section, and a display controller.

The organic EL display 3 provided in the display unit 11 is given a role to display an object at the left rear of the vehicle (an image seen in the left side mirror in ordinary cases), while the organic EL display 6 provided in the display unit 14 is given a role to display an object at the right rear of the vehicle (an image seen in the right side mirror in ordinary cases).

In ordinary cases, side mirrors are mounted on opposite side portions of a vehicle, and a driver can check a left-rear view a right-rear view from the vehicle through the side mirrors. However, there is a problem that since the side mirrors exist outside the vehicle body, the driver cannot easily recognize images on the side mirrors (particularly in a rainy day).

However, it is difficult to realize a system in which an object at the left rear of a vehicle and an object at the right rear of the vehicle are displayed on liquid crystal displays in the conventional instrument panel because of the problem that the amount of information displayable on each liquid crystal display is not sufficiently large, and because of the problem that the response speed of the liquid crystal display is low. In particular, it is a known fact that the response speed of human eyes is extremely high. It is difficult achieve high-speed display commensurable with the response speed of human eyes by using the liquid crystal display.

In this embodiment, therefore, the system using features of the present invention is arranged to display an image of an object at the left rear of the vehicle on the organic EL display 3 and an image of an object at the right rear of the vehicle on the organic EL display 6.

The organic EL display 4 provided in the display unit 12 is given a role to display a speedometer. The organic EL display 5 provided in the display unit 13 is given a role to display navigation information such as map information, road information, and route guide information.

Memories 11a, 12a, 13a, and 14a are each a detachable card-type recording medium. For example, a Compactflash (Japanese registered trademark) card can be used as this recording medium. Each of the memory 11a, 12a, 13a, and 14a is inserted in the slot provided in the corresponding one of the display units 11 to 14 to perform read/write of a program or data.

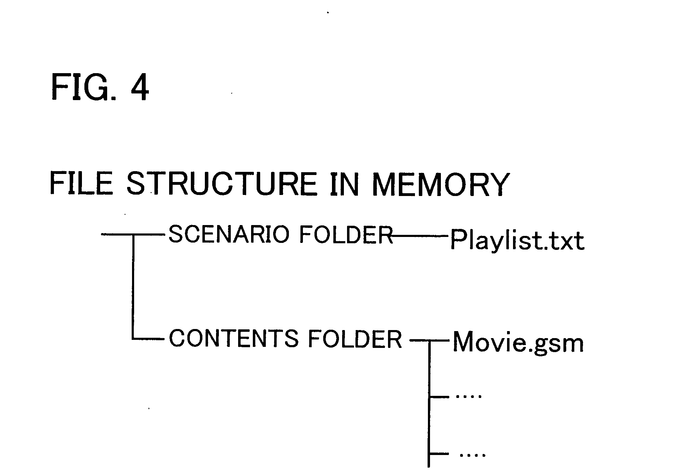

FIG. 4 shows a file structure in each of the memory 11a, 12a, 13a, and 14a. As shown in FIG. 4, a scenario folder and a contents folder are stored in each of the memory 11a, 12a, 13a, and 14a. A "Playlist.txt" file is stored in the scenario folder. A "Movie.gsm" file is stored in the contents folder.

A "Playlist.txt" file is a file containing a program for making the display controller 11c, 12c, 13c, or 14c execute a process for displaying an image on the organic EL display. Such a program is formed of instruction groups designating image data display timing, the number of times image data is displayed, and the order in which image data is displayed, etc. (for example, an instruction to repeat displaying "Movie.gsm"), selected according to the role of each of the display units 11, 12, 13, or 14.

A "Movie.gsm" file is a file containing image data to be displayed on the organic EL display. One or a plurality of "Movie.gsm" files are stored in one contents folder (If a plurality of "Movie.gsm" files exist, they are discriminated by being named "Movie1.gsm", "Movie2.gsm", ..). A "Movie.gsm" file may be stored in the contents folder in advance or may be stored in the contents folder by being transferred from the control unit 19 at a predetermined time.

More specifically, a "Movie.gsm" file stored in the contents folder in each of the memories 11a, 13a, and 14a is transferred at predetermined intervals from the control unit 19 to rewrite the existing data. Image data in a "Movie.gsm" file transferred to the memory 11a is data on an image of an object at the left rear of the vehicle picked up by the image pickup unit 15 described below. Image data in a "Movie.gsm" file transferred to the memory 14a is data on an image of an object at the right rear of the vehicle picked up by the image pickup unit 15 described below. Image data in a "Movie.gsm" file transferred to the memory 13a is data relating to navigation information such as map information, road information, and route guide information.

On the other hand, "Movie.gsm" files transferred to the contents folder in the memory 12a include one transferred at predetermined intervals from the control unit 19 to rewrite the existing data, and one stored in the contents folder in advance. For example, in the memory 12a, a "Movie.gsm" containing image data except data on "needle 121" of the speedometer shown in FIG. 2 is stored in the contents folder in advance, and a "Movie.gsm" containing image data on "needle 121" of the speedometer is transferred at predetermined intervals from the control unit 19 to rewrite the existing data. Image data on "needle 121" of the speedometer is produced in the vehicle speed conversion unit 18 described below.

Each of the switch sections 11b, 12b, 13b, and 14b is constituted by a group of scanning switches for controlling potentials at scanning electrodes, and a group of data switches for controlling potentials at data electrodes. Each of switches in the group of scanning switches and the group of data switches is controlled by a drive signal from the display controller 11c, 12c, 13c, or 14c.

Each of the display controllers 11c, 12c, 13c, and 14c has a central processing unit (CPU) and a combination logic circuit each having a computation function, a read-only memory (ROM) in which programs and data for control of various operations are stored, and a random-access memory (RAM) used as a working storage area, etc. The CPU executes a process for displaying an image on the organic EL display according to a program in a "Playlist.txt" file stored in the scenario folder in the memory. At this time, the CPU has the function of converting image data in a "Movie.gsm" file stored in the contents folder in the memory into matrix data to be displayed at a predetermined position on the organic EL display.

If the organic EL elements corresponding to matrix line intersections in each of the EL display are to be supplied with data on unit dots corresponding to pixels, the corresponding display controller 11c, 12c, 13c, or 14c outputs drive signals for determining dot coordinates to the switches in the group of scanning switches and the group of data switches.

An image is thereby displayed on each of the organic EL displays 3 to 6 according to the role of the display. More specifically, each of the display controllers 11c, 13c, and 14c displays, according to a program in a "Playlist.txt" file stored in the scenario folder in the memory, image data from a "Movie.gsm" file transferred from the control unit 19 and stored in the contents folder, the image data being displayed on the organic EL display at a predetermined rate (e.g., 12 to 16 frames per seconds).

Thus, an image of an object at the left rear of the vehicle is displayed as a moving image on the organic EL display 3, while an image of an object at the right rear of the vehicle is displayed as a moving image on the organic EL display 6. Thus, in this embodiment, organic EL displays having a response speed higher than that of liquid crystal displays are used, and objects at the right rear of the vehicle and objects at the left rear of the vehicle, which change moment by moment, can be displayed on the organic EL displays at a high speed comparable to the response speed of human eyes. The display area of the organic EL displays 3 and 6 can be increased as described above. Consequently, the EL displays 3 and 6 enable the driver to check left-rear and right-rear views from the vehicle more easily in comparison with the conventional side mirrors.

On the organic EL display 5, navigation information, such as map information, road information, and route guide information, which change with time, is displayed as a moving image, as shown in FIG. 2. With this moving image, an arrow indicating the direction in which the vehicle moves is displayed. Since as described above the instrument panel 1 in which the organic EL display 5 is mounted is set so that the angle between the front surface of the instrument panel 1 and the line of driver's sight is equal to or larger than 130 degrees and smaller than the angle to a horizontal line parallel to the ground, the direction of "arrow 131" on the road displayed on the organic EL display 5 shown in FIG. 2 can be recognized as closer to reality by the driver, thus improving the convenience of the display.

On the other hand, the display controller 12c repeats reading in a predetermined cycle of a "Movie.gsm" file stored in the contents folder in advance, according to a program in a "Playlist.txt" file stored in the scenario folder, displays the read image data on the organic EL display 4. The display controller 12c also displays, in a predetermined cycle, on the organic EL display 4, image data from another "Movie.gsm" file transferred from the control unit 19 and stored in the contents folder. In actuality, different "Movie.gsm" files are discriminated, for example, by being named "Movie1.gsm" and "Movie2.gsm". Thus, a speedometer including "needle 121" which changes according to the vehicle speed is displayed as a partially moving image on the organic EL display 4, as shown in FIG. 2.

The image pickup unit 15 is constituted by a first lens, a first image pickup device (e.g., a well-known charge coupled device (CCD)), a first analog-to-digital (A/D) converter, asecond lens, a second image pickup device (e.g., a well-known charge coupled device (CCD)), and a second A/D converter. The first lens and the first image pickup device are mounted at a predetermined position outside a left door of the vehicle (e.g., the position at which a left side mirror is mounted in ordinary cases). The second lens and the second image pickup device are mounted at a predetermined position outside a right door of the vehicle (e.g., the position at which a right side mirror is mounted in ordinary cases).

The first image pickup device extracts an image signal from image light from an object at the left rear of the vehicle, which light enters the first image pickup device through the first lens. The first image pickup device supplies the extracted image signal to the first A/D converter. The first A/D converter samples in a predetermined sampling cycle the image signal supplied from the first image pickup device to obtain a digital signal, and sends out this signal to the control unit 19.

The second image pickup device extracts an image signal from image light from an object at the right rear of the vehicle, which light enters the second image pickup device through the second lens. The second image pickup device supplies the extracted image signal to the second A/D converter. The second A/D converter samples in a predetermined sampling cycle the image signal supplied from the second image pickup device to obtain a digital signal, and sends out this signal to the control unit 19.

The vehicle speed sensor 16 detects the distance traveled by the vehicle and the vehicle speed on the basis of vehicle speed pulses, and sends out signals representing the distance and the speed to the navigation unit 17 and the control unit 19.

The navigation unit 17 is constituted by a global positioning system (GPS) receiver which receives electric waves broadcast from a GPS satellite to detect information (latitude, longitude) on the current position of the vehicle contained in the received electric waves, an acceleration sensor which detects information about the state of traveling of the vehicle as seen in the vertical direction, a gyroscope sensor which detects information about the direction in which the vehicle is traveling, a storage device in which map information including road information, etc., is recorded, a Vehicle Information Communication System (VICS) receiver which receives traffic information including congestion information from information communication facilities installed along loads, a controller which performs a well-known navigation process, and an operating device operated by the driver to set a destination, etc., and to provide various operating instructions.

The controller has a CPU having a computing function, a ROM in which programs and data for control of various operations are stored, and a RAM used as a working storage area, etc. The controller computes the location of the vehicle with accuracy on the basis of information detected by the GPS receiver, the acceleration sensor, gyroscope sensor and the vehicle speed sensor 16, obtains necessary map information from the storage device and necessary traffic information from the VICS receiver, produces image data for providing navigation information to the driver, sends out this data to the control unit 19. The controller also executes search for a route to a destination set through the operating device, produces image data for providing search results to the driver, and sends out this data to the control unit 19.

The vehicle speed conversion unit 18 has a CPU having a computing function, a ROM in which programs and data (including image data on "needle 121" according to the vehicle speed in this embodiment) for control of various operations are stored, and a RAM used as a working storage area, etc. The vehicle speed conversion unit 18 reads out image data on "needle 121" from the ROM according to the vehicle speed data from the vehicle speed sensor 16, and sends out the image data to the control unit 19.

The control unit 19 has a CPU 19a having computing and discriminating functions, a ROM 19b in which programs and data for control of various operations are stored, and a RAM 19c used as a working storage area, and controls operations in the entire vehicle-mounted image display system 100. The control unit 19 also has an image data processing circuit 19d which captures image data from the image pickup unit 15, the navigation unit 17, and the vehicle speed conversion unit 18, converts (by using conversion software provided therein) the image data into "Movie.gsm" files according to instructions from the CPU 19a, and transfers the "Movie.gsm" files to the memories in the display units 11 to 14.

The control unit 19 has a slot for insertion of memory 19e (e.g., a Compactflash (registered trademark) card) which is a detachable card-type recording medium. The memory 19e is inserted in the slot to perform read/write of a program and data.

The CPU 19a in the control unit 19 issues an image display process start command and an image display process halt command to each of the display units 11 to 14 according to a program stored in the ROM 19b and instructions from the setting device 20. The CPU 19a also issues a "Movie.gsm" file transfer command to the image data processing circuit 19d according to a program stored in the ROM 19b and an instruction from the setting device 20.

The setting device 20 is provided with a normal-operation/testing change switch for setting one of a normal-operation mode and a testing mode, and operating switches corresponding to the display units. When the normal-operation mode is set by the normal-operation/testing change switch, the control unit 19 detects this setting and issues the image display process start command to each of the display units 11 to 14 (display controllers 11c, 12c, 13c, and 14c).

When the testing mode is set by the normal-operation/testing change switch, the control unit 19 detects this setting and issues the image display process halt command to each of the display units 11 to 14 (display controllers 11c, 12c, 13c, and 14c).

When in the testing mode one of the operating switches corresponding to the display units, e.g., the operating switch corresponding to the display unit 11 is pressed, the control unit 19 detects this switch operation and issues the image display process start command to the display unit 11 (display controller 11c).

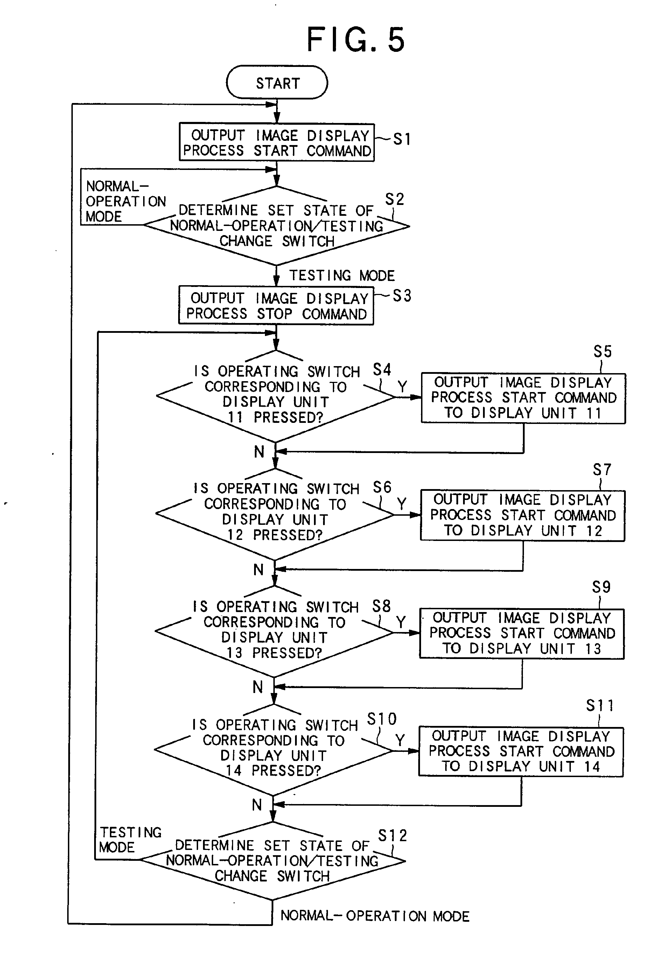

Next, the operation of the vehicle-mounted image display system 100 will be described with reference to FIG. 5. FIG. 5 is a flowchart showing processing in the CPU 19a of the control unit 19.

Processing shown in FIG. 5 is started, for example, by insertion of a vehicle key. The CPU 19a first outputs the image display process start command to each of the display units 11 to 14 (step S1). At this time, the CPU 19a issues to the image data processing circuit 19d a command to transfer a "Movie.gsm" files to each of the display units 11 to 14.

Thereby, the image data processing circuit 19d converts image data from the first A/D converter of the image pickup unit 15 into a "Movie.gsm" file, transfers this file to a predetermined address in the memory 11a of the display unit 11, converts image data from the second A/D converter of the image pickup unit 15 into a "Movie.gsm" file, transfers this file to a predetermined address in the memory 14a of the display unit 14, converts image data from the navigation unit 17 into a "Movie.gsm" file, transfers this file to a predetermined address in the memory 13a of the display unit 13, converts image data from the vehicle speed conversion unit 18 into a "Movie.gsm" file, and transfers this file to a predetermined address in the memory 12a of the display unit 12. The image data processing circuit 19d transfers each "Movie.gsm" file at predetermined intervals.

In the display unit 11 receiving the image display process start command from the control unit 19, the image data in the "Movie.gsm" file transferred from the control unit 19 and stored in the contents folder in the memory 11a is displayed in a predetermined cycle on the organic EL display 3 by the display controller 11c.

In the display unit 12 receiving the image display process start command from the control unit 19, the image data in the "Movie.gsm" file transferred from the control unit 19 and stored in the contents folder in the memory 12a is displayed in a predetermined cycle on the organic EL display 4 by the display controller 12c.

In the display unit 13 receiving the image display process start command from the control unit 19, the image data in the "Movie.gsm" file transferred from the control unit 19 and stored in the contents folder in the memory 13a is displayed in a predetermined cycle on the organic EL display 5 by the display controller 13c.

In the display unit 14 receiving the image display process start command from the control unit 19, the image data in the "Movie.gsm" file transferred from the control unit 19 and stored in the contents folder in the memory 14a is displayed in a predetermined cycle on the organic EL display 6 by the display controller 14c.

The CPU 19a then makes a determination as to the set state of the normal-operation/testing change switch (step S2). When the CPU 19a determines the setting in the testing mode, it outputs the image display process stop command to each of the display units 11 to 14 (step S3). At this time, the CPU 19a also outputs to each of the display units 11 to 14 a command to stop transfer of the "Movie.gsm" file.

By these commands, each of the display units 11 to 14 stops the image display process and the image data processing circuit 19d stops transfer of the "Movie.gsm" file.

The CPU 19a then performs detection from the setting device 20 as to whether each of the operating switches corresponding to the display units has been pressed (steps S4, S6, S8, and S10). When one of these switches is pressed, the CPU 19a outputs the image display process start command (for operation in the testing mode) to the display unit (one of the display units 11 to 14) corresponding to the operating switch (one of steps S5, S7, S9, and S11). At this time, the CPU 19a outputs to the image data processing circuit 19d a command (for operation in the testing mode) to transfer a "Movie.gsm" file to the display unit (one of the display units 11 to 14) corresponding to the operating switch.

Thereby, the image data processing circuit 19d transfers at predetermined intervals the "Movie.gsm" file corresponding to the pressed operating switch to a predetermined address in the memory of the display unit (one of the display units 11 to 14) corresponding to the pressed operating switch. This data transfer in the testing mode is performed a predetermined number of times by the image data processing circuit 19d.

In the display unit (one of the display units 11 to 14) receiving the image display process start command, the display controller receives the image display process start command from the control unit 19, and displays, on the display (one of the organic EL displays 3 to 6), in a predetermined cycle, image data in the "Movie.gsm" file transferred from the control unit 19 and stored in the contents folder in the memory. Display of image data in the testing mode is performed a predetermined number of times by the display controller.

As described above, when the testing mode is set, an image to be displayed on the organic EL display in each of the display units can be individually displayed by the corresponding operating switch in the setting device 20.

The CPU 19a then makes a determination as to the set state of the normal-operation/testing change switch (step S12). When the CPU 19a determines the setting in the testing mode, it again performs processing in step S4 and repeats the subsequent steps. When the CPU 19a determines the setting in the normal-operation mode, the process returns to step S1.

In this embodiment, as described above, the instrument panel 1 is inclined by about 40 degrees or more away from the driver from the position E of the conventional instrument panel (at which the angle between the front surface of the instrument panel and the line of driver's sight D is 90 degrees), so that the display area of the organic EL displays mounted in the instrument panel 1 and the range of driver's visual recognition can be increased to enable provision of a larger amount of information.

Also, the display system is arranged to display navigation information on the organic EL display 3 on the instrument panel 1, thereby enabling the driver to recognize the actual forward traveling direction of the vehicle expressed with higher reality. The convenience of the display system is thus improved.

The display system is also arranged to image an object at the left rear of the vehicle and an object at the right rear of the vehicle on the organic EL displays 1 and 4 on the instrument panel 1, thereby eliminating the need for side mirrors conventionally mounted on opposite side portions of a vehicle. The driver can check left-rear and right-rear views from the vehicle more easily when using the EL displays than when using the conventional side mirrors. Also, the display area of each of the organic EL displays 1 and 4 can be increased as described above to ensure that the driver can check left-rear and right-rear views from the vehicle more easily when using the organic EL displays 1 and 4 than when using the conventional side mirrors.

In the above-described embodiment, the display system is arranged to image an object at the left rear of the vehicle, an object at the right rear of the vehicle, a speedometer, and navigation information on the organic EL displays 1 to 4. However, the present invention is not limited to this arrangement. For example, the display system may be arranged to enable a videotape player or a digital versatile disc (DVD) player to be connected to the control unit 19 and to enable image data to be transferred from the video tape player or the DVD player to the memory of the display unit (one of the display units 11 to 14) through the control unit 19 and displayed on the organic EL display by the display controller. This arrangement enables entertaining use of the organic EL display in the instrument panel.

In the above-described embodiment, the arrangement may also be such that an image according driver's preference, e.g., a moving image obtained with a video camera for a personal purpose is recorded on a memory which can be detachably inserted in one of the above-described display units 11 to 14, the driver or another passenger inserts this memory in the slot of the display unit, and the moving image recorded on the memory is displayed on the organic EL display, thereby enabling entertaining use of the organic EL display in the instrument panel.

In such a case, the arrangement may be such that a memory on which image data according to driver's preference is recorded is inserted in the slot of the control unit 19 and is transferred from the control unit 19 to the memory of one of the display units, thereby enabling centralized control on the control unit side of images displayed on the plurality of organic EL displays.

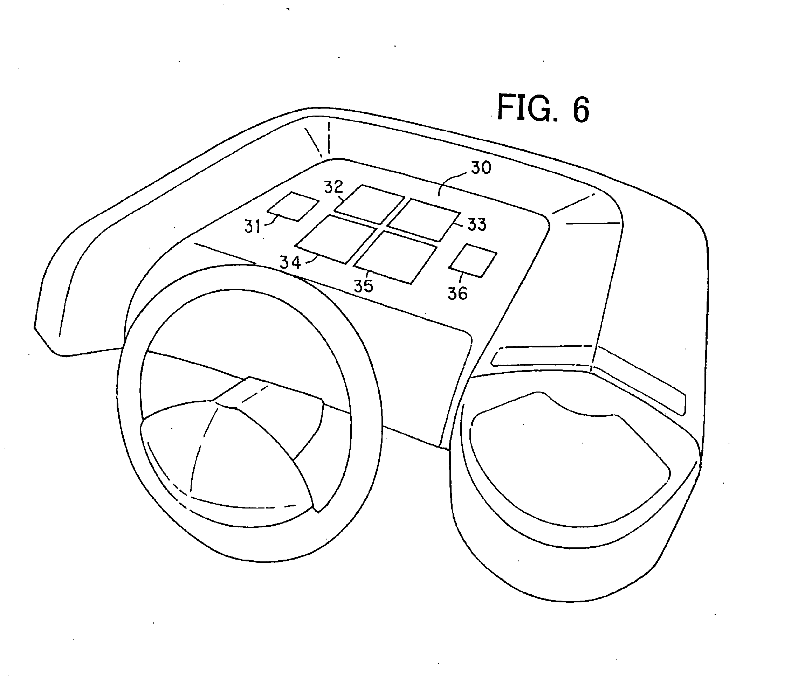

In the above-described embodiment, four organic EL displays are mounted on the instrument panel 1. However, the present invention is not limited to this arrangement. Five or more organic EL displays may be mounted on the instrument panel. FIG. 6 shows an example of a case where six organic EL displays 31 to 36 are mounted on an instrument panel 30. Also in the case shown in FIG. 6, the instrument panel 30 and the organic EL displays 31 to 36 are set so that the angle between the front surface of each organic EL display and the line of driver's sight is, for example, equal to or larger than about 130 degrees and smaller than the angle to a horizontal line parallel to the ground.

In the above-described embodiment, the vehicle-mounted image display system 100 has the advantage of setting the testing mode in which an image can be individually displayed on each of the organic EL displays by the operating switch in the setting device 20. This advantage can also be utilized in an exhibition. For example, the vehicle-mounted image display system 100 is adapted to use in an exhibition (the instrument panel is not required in this case) such that when one of the operating switches in the setting device is pressed, a demonstration display is produced on the organic EL display in the corresponding display unit. A visitor in the exhibition can view the demonstration display any number of times by pressing the operating switch in the setting device.

The embodiment of the present invention has been described with respect to the cases in which organic EL displays are mounted in an instrument panel. However, the present invention is not limited to the described cases. Organic EL displays may be set outside an instrument panel so that the angle between the front surface of each organic EL display and the line of driver' s sight is equal to or larger than about 130 degrees and smaller than the angle to a horizontal line parallel to the ground.

In the above description of the embodiment, organic EL displays have been described the display in accordance with the present invention. However, the display in accordance with the present invention is not limited to the EL display. For example, a plasma display, a field-emission display or the like may also be used.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A method of setting a display which is set within a view angle of a driver who drives a vehicle, and on which a certain image is displayed, **characterized by** the method of setting the display (3,4,5,6) which there is set so that the angle between the screen of the display (3,4,5,6) and a line of driver's sight is larger than 90 degrees by a predetermined angle.

2. The method according to claim 1, wherein the display (3,4,5,6) is set so that the angle between the screen of the display and the line of driver's sight is equal to or larger than 130 degrees and equal to or smaller than the angle to a horizontal line parallel to the ground.

3. The method according to claim 1 or 2, wherein the angle between the screen of the display (3,4,5,6) and the line of driver' s sight is adjustable.

4. The method according to any one of claims 1 to 3, wherein the display (3,4,5,6) is an organic EL display.

5. A display which is set within a view angle of a driver who drives a vehicle, and on which a certain image is displayed, **characterized in that** the display (3,4,5,6) is set so that an angle between a screen of the display and a line of driver's sight is larger than 90 degrees by a predetermined angle.

6. The display according to claim 5, wherein the display (3,4,5,6) is set so that the angle between the screen of the display and the line of driver's sight is equal to or larger than 130 degrees and equal to or smaller than the angle to a horizontal line parallel to the ground.

7. The display according to claim 5 or 6, wherein the display (3,4,5,6) is an organic EL display.

8. A method of setting an instrument panel at a front of a driver's seat in a vehicle, **characterized by** the method of setting the instrument panel (1) which there is set so that the angle between the front surface of the instrument panel (1) and a line of driver's sight is larger than 90 degrees by a predetermined angle.

9. The method according to claim 8, wherein the instrument panel (1) is set so that the angle between the front surface of the instrument panel (1) and the line of driver's sight is equal to or larger than 130 degrees and equal to or smaller than the angle to a horizontal line parallel to the ground.

10. The method according to claim 8 or 9, wherein the angle between the front surface of the instrument panel (1) and the line of driver's sight is adjustable.

11. The method according to any one of claims 8 to 10, wherein a display (3,4,5,6) on which a certain image is displayed is mounted in the front surface of the instrument panel (1).

12. The method according to any one of claims 8 to 10, wherein displays (3,4,5,6) on which images of a left-rear view and a right-rear view from the vehicle are displayed are mounted in the front surface of the instrument panel (1).

13. The method according to any one of claims 8 to 10, wherein a display (3,4,5,6) on which an image of a road traveled by the vehicle and an arrow indicating the direction of traveling of the vehicle are displayed is mounted in the front surface of the instrument panel (1).

14. The method according to any one of claims 11 to 13, wherein each of the displays (3,4,5,6) is an organic EL display.

15. A setting structure of a display which is set within a view angle of a driver who drives a vehicle, and on which a certain image is displayed, **characterized by** the setting structure of the display (3,4,5,6) which is set so that the angle between the screen of the display (3,4,5,6) and a line of driver's sight is larger than 90 degrees by a predetermined angle.

16. The setting structure according to claim 15, wherein the display (3,4,5,6) is set so that the angle between the screen of the display (3,4,5,6) and the line of driver's sight is equal to or larger than 130 degrees and equal to or smaller than the angle to a horizontal line parallel to the ground.

17. A setting structure of an instrument panel which is set at a front of a driver's seat in a vehicle, **characterized by** the setting structure of the instrument panel (1) which is set so that the angle between the front surface of the instrument panel (1) and a line of driver's sight is larger than 90 degrees by a predetermined angle.

18. The setting structure according to claim 17, wherein the instrument panel (1) is set so that the angle between the front surface of the instrument panel (1) and the line of driver's sight is equal to or larger than 130 degrees and equal to or smaller than the angle to a horizontal line parallel to the ground.

19. The setting structure according to claim 17, wherein displays (3,4,5,6) on which images of a left-rear view and a right-rear view from the vehicle are displayed are mounted in the front surface of the instrument panel (1).

20. The setting structure according to claim 17, wherein a display (3,4,5,6) on which an image of a road traveled by the vehicle and an arrow indicating the direction of traveling of the vehicle are displayed is mounted in the front surface of the instrument panel (1).
